# EUROPEAN PATENT SPECIFICATION

(11) **EP 0 621 851 B1**
(45) Date of publication and mention of the grant of the patent: **10.06.1998**
(21) Application number: 93902415.4
(22) Date of filing: 19.01.1993
(51) Int. Cl.: B65G 17/08

(54) **CONVEYOR**
FÖRDERANLAGE
INSTALLATION DE TRANSPORT

(30) Priority: 21.01.1992 GB 9201213; 23.03.1992 GB 9206267
(43) Date of publication of application: 02.11.1994
(73) Proprietor: Robertson, Kelvin Taylor, Scarborough, North Yorkshire YO12 5QB (GB)
(72) Inventor: Robertson, Kelvin Taylor, Scarborough, North Yorkshire YO12 5QB (GB)
(74) Representative: Sherrard-Smith, Hugh
(86) International application number: GB9300116
(87) International publication number: WO9314010

(56) References cited:
- EP-A- 0 398 679
- FR-A- 2 114 017
- US-A- 3 807 548

## Description

The present invention relates to conveyors, and particularly although not exclusively, to conveyors which have belts comprising a plurality of individual modules.

A known conveyor belt comprises a plurality of modules connected in series and each having a flat upper surface for carrying a load. The modules are connected to each other via a chain linkage mechanism to which each module is connected and which is driven along a conveyor track to provide movement of the modules along the track. Each module is connected to the chain about a central upright part of the module. Where the belt turns around a bend, each module pivots with respect to its directly forward and directly aft neighbouring modules, the pivotal action being generally about the central upright part of the module. Each module, as seen in front view, has a shape similar to a flattened "T", wherein the flat upper surface overhangs at each side of the central upright part of the module.

The upper surface of such prior modules has a trailing edge having a flattened "V" shape and which in use overlaps a lower surface of a directly aft module so that during movement of the module around the bend, articles can not slip between the adjacent modules.

However, because of the construction of such modules, and their method of linkage together, a conveyor belt made of these modules is limited to the modules being connected in series to each other. Therefore to provide a wide conveyor necessitates having a wide module. Thus, for each width of conveyor to be produced, a separate size of module is required.

If two or more belts were run in parallel to each other to provide a wider conveyor, where a bend is encountered, the distance travelled by the belt on the outside bend would be greater than that travelled by the belt on the inside of the bend, and so the inner belt would accelerate around the bend at a different rate to the outer belt, causing pivotal movement on the conveyor of any goods which straddled both belts. One consequence of such pivotal movement is that, in order to get the articles back to their correct orientation, it is necessary to manoeuvre the articles thus involving a further operation. Another consequence is that the spacing between articles must be increased to avoid articles knocking against each other. Also, small articles may slip between the gap between the two belts. Furthermore the pivotal movement is unpredictable and articles may fall off the conveyor.

EP-A-0 398 679 (Robertson) shows a conveyor with a plurality of modules connected together in the direction of intended direction of travel, the modules also being connected together in the direction transverse to the intended direction of travel with the conveyor being arranged to travel around a curve. However, no substantially flat or continuous supporting surface is provided.

Furthermore, a conveyor with a continuous supporting surface that travels around curves is known from US-A-3,807,548.

According to the present invention a conveyor is defined in claim 1, the conveyor comprising a plurality of identical modules connected together in the direction of intended travel in which the modules are also connected together in the direction transverse to the intended direction of travel with the conveyor being arranged, in use, to travel around a curve wherein each module includes a substantially flat or continuous supporting surface and a forwardly facing overlapping portion arranged to extend partly over an adjacent module in the intended direction of travel at an inner region of the curve, the module also including forwardly facing projections at both lateral ends thereof that extend beyond the overlapping portion in the intended direction of travel, which projections are connected to adjacent identical modules in a direction transverse to the intended direction of travel and also adjacent identical modules in the intended direction of travel, the forwardly facing projections being connected to the underside of the overlapping portion.

The provision of a flat or continuous supporting surface has a safety aspect as fingers are not likely to be trapped between parts of the conveyor. Furthermore, meat or other soft products or small products carried on the conveyor will not tend to fall down or between parts of the conveyor thereby possibly trapping the product or jamming the conveyor.

The flat supporting surface of the trailing portion of each module may include a recessed portion arranged, in use, to be at least partially overlapped by the overlapping portion of an adjacent module as the conveyor travels around a curve. The recessed portion of the module may extend across more than half the width of the module and the recessed portion may extend across substantially the complete extent of the module.

At least a part of the supporting surface of adjacent portions of modules in the intended direction of travel may be arranged to be spaced from each other when the conveyor undergoes a substantial change in inclination.

The conveyor may include a single guide arranged to inhibit both inwards and upwards movement of the conveyor with respect to a turn. The guide may provide an upwardly facing portion which is arranged to provide support for the module.

Adjacent modules, in the direction transverse to the intended direction of travel, may be linked to each other by a common linkage member, which linkage member may be resiliently flexible.

According to a further aspect of the present invention a module for use in a conveyor is defined in claim 13, the module including first and second connecting means that are arranged to be used to connect the module to adjacent identical modules in front of, and behind the module, and third connecting means which are arranged to be used to connect the module to an adjacent identical module at least partially to the side of the module, wherein the module comprises a substantially flat or continuous supporting surface and that the module includes a forwardly facing overlapping portion adapted to overlap by extending partly over an adjacent trailing portion of an identical module located in front of the module when, in use, the connected modules travel around a curve and are located at an inner region of the curve, the first and third connecting means being forwardly facing projections at both lateral ends of the module that extend beyond the overlapping portion in the intended direction of travel, the forwardly facing projections being connected to the underside of the overlapping portion.

By way of example, specific embodiments of the present invention will now be described with reference to the accompanying drawings in which:-
Figure 1 shows a plan view of a module for a conveyor belt from above;
Figure 2 shows an under side view of the module of Figure 1;
Figure 3 shows a front view of the module of Figure 1;
Figure 3A is a view similar to Figure 3 with an alternative guide and support;
Figure 4 shows an end-on view of the module of Figure 1;
Figure 5 shows a plurality of modules connected in series in a conveyor belt;
Figure 6 shows a cross-sectional view of a conveyor track having a conveyor belt which is three modules wide;
Figure 7 shows a plan view of a portion of the conveyor belt of Figure 6, which portion is arranged around a bend;
Figure 8 is a view similar to Figure 1 showing a modified module, and
Figure 9 is a view similar to Figure 1 showing a further modified module.

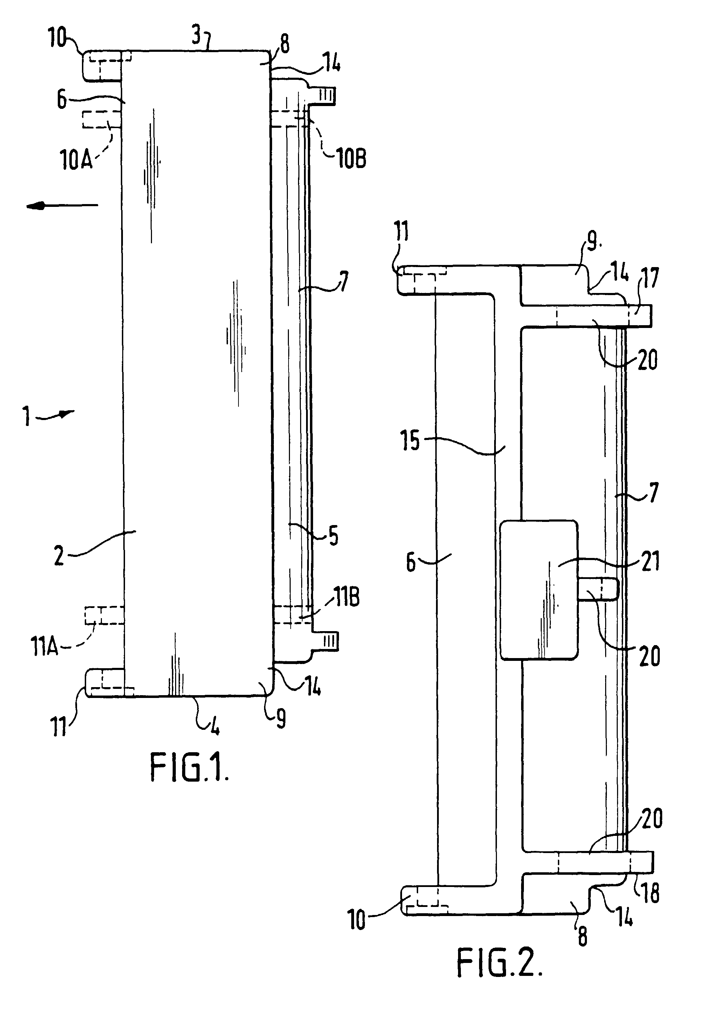

Referring to Figure 1 of the accompanying drawings, a module 1 for a conveyor belt has a top comprising an upwardly facing flat upper surface 2 which extends between ends 3, 4 of the module, and an upwardly facing flat lower surface 5 which also extends between the ends 3 and 4 but which stops just short of those ends. The lower surface 5 is recessed with respect to the upper surface 2 such that the upper surface 2 stands proud of the lower surface 5. The undersides of the upper and lower surfaces are continuous with each other. The upper surface 2 extends over an overhanging flat portion 6 which is of thickness of around 1 to 2mm which is of the same thickness as the height difference between the upper and lower surfaces.

When a plurality of such modules are connected in series, such that one module follows another in a belt, the overhanging flat portion 6 of a following module overhangs and can slide over the lower surface 5 of a preceding module, the direction of movement of the modules being in the direction of the arrow shown in Figure 1.

The module also has overhanging edge portions 8, 9, at ends 3, 4 respectively at the trailing edge of the upper surface. In use, these overhanging edge portions can overhang forwardly facing projections 10, 11 respectively of a following module. The forwardly facing projections have circular holes therethrough for insertion of a linkage rod 12 (not drawn in Figure 1) to link the module to a preceding module in the belt.

In an alternative embodiment additional forwardly facing projections 10 and 10B are provided which locate in openings 10B and 11B of adjacent modules. These additional projections reduce the bending moment on the linkage rods 12.

The module is preferably made of a plastics material, such as PVC, but can be made of a metal. The module is preferably cast or of moulded construction.

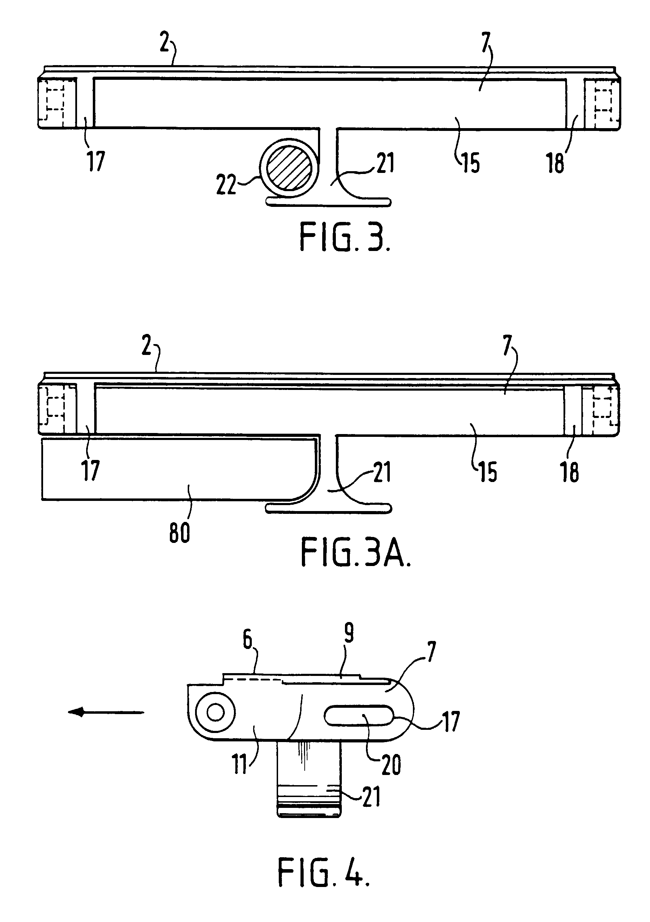

Figure 2 of the accompanying drawings shows an underside of the module of Figure 1. A main body member 15 runs along the underside of the upper surface, and has the forwardly facing projections 10, 11 attached thereto together with rearwardly facing projections 17. Each of the rearwardly facing projections has an elongate slot 20 therein for passage of the linkage rod 12 (not drawn in Figure 2) therethrough. The module has a guidance foot 21 which protrudes from the main body member 15 and central rearwardly facing projection 18. The guidance foot has an inverted "T" shape, rounded for engaging a conveyor guide rail 22 (see Figure 3 of the accompanying drawings).

In use, the forwardly facing projections 10, 11 of a following module are connected to the rearwardly facing projections 17 and 18 of a preceding module by the linkage rod 12 (not shown in Figure 2) in such a manner that the two modules can move relative to each other with a translational movement, whereby the modules can slide closer together or further apart to a limited extent from each other and can also orientate with respect to each other such that, when viewed from above, the lengths of each of the modules can angle towards each other. Where the preceding and following modules are orientated angled lengthwise to each other, the linkage rod 12, connected parallel to the length of a following module and held in circular clearance holes in the forwardly facing projections of that module, will be angled with respect to the elongate slots 20 of the immediately preceding module.

It can be seen that the rearwardly spacing projections 17 and 18 are offset from the forwardly facing projections 10 and 11 in order to allow adjacent modules to be angled relative to each other and the direction of travel without the projections interfering with each other.

The lower surface 5 has a downwardly curved edge 7 at its trailing edge to assist in the leading edge of a flat portion 6 of a following module in sliding over the lower surface. This is of particular importance when the conveyor belt is being passed around a toothed wheel. When the conveyor is passing around such a toothed wheel, the lower surface 5 of one module becomes spaced in the direction of travel from the upper surface of an adjacent module but the rounded rearwardly facing surfaces of the projections 17 and 18 (which extend rearwardly to project beyond the lower surface 5) co-operate with the underside of a trailing module in order to maintain the modules in the required relationship and to assist in the return of the flat portion 6 to overlap the surface 5 when the turn caused by the tooth wheel ends. However, the trailing edge 76 of one module becomes spaced from an adjacent leading edge 78 and any particles or small pieces which should have left the conveyor can drop through, or be brushed through that space.

Referring to Figure 3 of the accompanying drawings, a front view of the module of Figure 1 is shown, illustrating the rearwardly facing projections 17 and 18 the guidance foot 21, the body member 15 and the rounded portion 7. Also shown is part of a guide rail 22 for guiding the module, and against which the foot 21 slides.

Figure 3A shows an alternative guide 80 which comprises a single member which provides resistance to a bending moment tending to tilt the module upwardly about the outer right hand edge and resistance to inwards movement.

Figure 4 of the accompanying drawings shows the module in end view, and shows the slots 20, the rounded portion 7, the guidance foot 21 and the end 11.

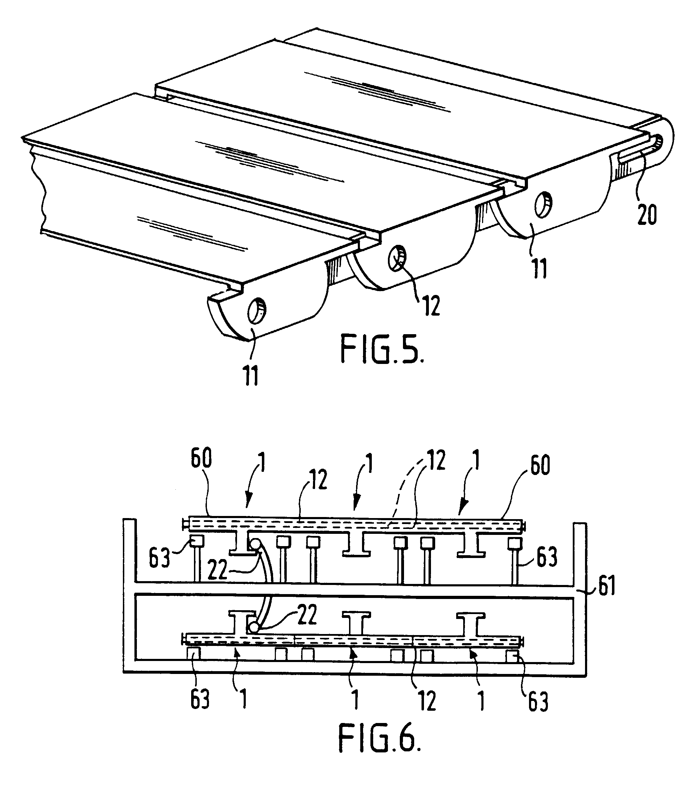

Referring to Figure 5 of the accompanying drawings, three modules each as described with reference to Figures 1 to 4, are shown connected together serially in a conveyor belt line. Linkage rods 12 are shown inserted in the forwardly facing projections 10, 11 and pass through the slots 20 of the rearwardly facing projections 17 and 18 of preceding modules.

Figure 6 shows a conveyor having a conveyor belt 60 comprising a plurality of modules 1 connected three abreast.

A row of three modules are connected together by a linkage rod 12 across the width of the conveyor belt. Successive rows are connected to provide three lines of serially connected modules la, 1b, 1c comprising the elongate conveyor belt 60 with each module being connected to the module or modules at the side.

The conveyor belt runs along a conveyor frame 61. The conveyor frame 61 has guidance rails 22 (for clarity, only one is shown in Figure 6 but there may be a plurality of such rails) and a plurality of support tracks 63, two of these support tracks being provided for each line of modules of the belt on an upper portion of the frame, for supporting the modules when they travel in a forward direction, and two tracks being provided for each line of modules on a lower part of the frame, to support the modules as they travel in a return direction.

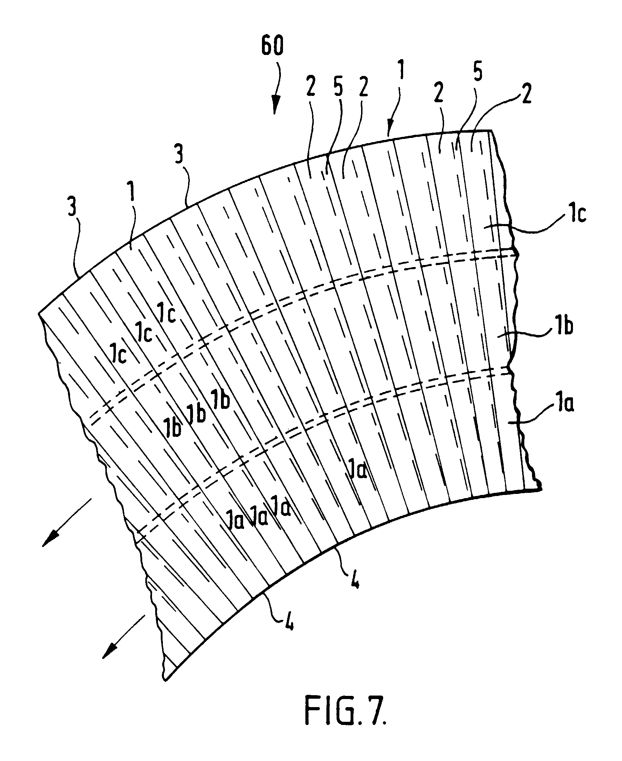

Referring to Figure 7 of the accompanying drawings, the conveyor belt 60 of Figure 6 is shown in plan view from above, and illustrates the interaction between the modules when the conveyor belt turns around a bend.

In use, when the belt turns around a bend, in the line of modules la nearest the inside of the bend, the modules may each move about their own connection projections 11 and/or 17 at the end 4. In a row of modules 1a, 1b, 1c, the three modules are connected in a substantially straight line by a single linkage rod 12. On the inside of the bend modules of the first line la can slide with respect to each other over a limited range such that the overhanging portion 6 of a following module movably overlaps a lower surface 5 of a preceding module.

The modules of the line 1c on the outside of the bend can also slide relative to each other in similar fashion, although because the modules in the line 1c must travel over a greater distance to get round the bend than the modules of the line 1a the modules in the line 1c move further apart from each other within the limits allowed by the linkage rods 12 in the slots 20 of the modules, such that a greater area of the lower surface 5 of each module in the line 1c is exposed than compared with the line 1a. The modules in the line 1b have their lower surfaces 5 exposed to a lesser extent than the modules in the line of 1c, but to a greater extent than the modules in the line 1a. The result is that in going around a bend, the outermost line of modules 1c expands more than the innermost line of modules 1a, but the modules in all three lines move at the same angular rate. Accordingly articles carried around a bend will not tend to twist and will remain leaving the same relative orientation to the direction of travel before a bend is encountered, as the bend it travelled around, and after the bend. Thus the articles can leave the belting, possibly to e transferred to another belting or for packing in a known orientation. Additionally, articles on the conveyor can be bunched up towards each other as they do not tend to twist or knock each other thereby allowing the belt to carry a higher density of articles.

Adjacent modules in lines 1a and 1b are connected at their ends 3, 4 respectively in their corresponding rows such that only a minimal gap is present between the lines of modules 1a and 1b. The lines of modules 1b and 1c are similarly connected. The belt is driven by a toothed wheel at one end of the frame such that all three modules connected in each row by a single linkage rod 12 are drawn forward at once without any substantial bending of the rod 12.

The linkage rod 12 may be resiliently flexible to accommodate any snagging between the lines and the track or frame and is preferably made of a plastics material, eg UPVC.

Whilst a belt having 3 lines of modules has been shown, the belt may be further extended, and it will be appreciated that the design of the modules and length of the slots 20 may be adjusted to suit the maximum number of lines of modules required in a belt.

Thus, specific embodiments of the present invention may provided a conveyor belt having a plurality of modules, which is capable of being extended widthwise by addition of further lines of modules, and which may efficiently travel around bends in a conveyor system whilst providing a substantially flat load carrying surface. The majority of that load carrying surface is provided by the flat upper surface 2 (and indeed is wholly provided by that surface 2 when the modules are travelling in a straight line and are bunched up). However, the flat lower surface 5 can also provide a part of the load carrying surface.

Due to the overlapping of portions of a module with neighbouring modules, small items or even particles may be carried on the conveyor without these slipping through the flat top or between gaps between the modules of adjacent rows.

Whilst in figures 5, 6 and 7, substantially identical modules have been shown interconnected, in some aspects of the invention, modules comprising a conveyor belt need not necessarily all be identical to each other.

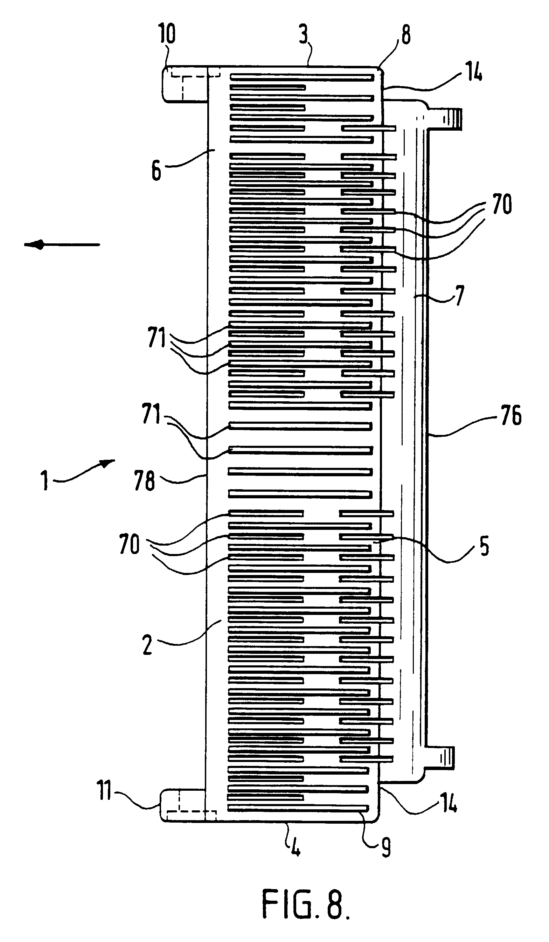

In another embodiment the modules 1 may have slots, perforations, openings or holes incorporated in the upper and/or lower flat surfaces, so that where the conveyor is to be used in, for example, food factories where the product is often wet with oil or liquid, the oil or liquid may drain through the conveyor and thus air is drying the product during transit Furthermore, air is able to circulate to the parts of the products above the slots. Similarly, dust or particles may pass through the holes. An embodiment including two rows of slots 70 is shown in Figure 8. In Figure 8, a series of raised ribs 71 may also be incorporated which support the articles just clear of the flat surface of the conveyor. Thus air is able to circulate around the products which may assist in the draining or drying of the products.

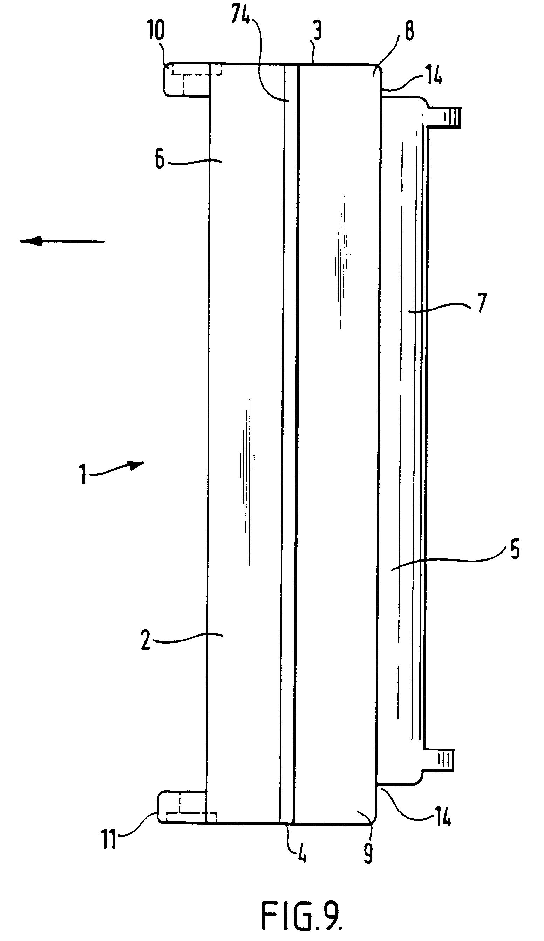

In Figure 9 the module includes an upwardly extending wall 74 which may be up to 100 mm high. Such a wall enables articles to be supported on the conveyor and for the wall to prevent the articles from slipping down or up when the conveyor is travelling up or down an incline. With such a conveyor, each module may include such a wall or the walls may be provided intermittently along the conveyor at every sixth or twelfth module, for example. With such a conveyor, a belt with more than one module across may be able to climb and rotate in alternate directions, if desired, and leave or commence turning at any location either in an inclined manner or in a generally horizontal direction.

Specific embodiments of the present invention may also have the further advantage that where the conveyor belt turns round a bend, because the modules are connected in a row with their lengths substantially parallel to each other, modules of an outer line may travel at a faster rate around the bend than modules of an inner line and therefore a product, for example a box, which is placed on the conveyor may not revolve around its own axis because differential angular speeds between the innermost and outermost lines of modules maybe substantially the same. Although modules of the outer line may move at a faster rate than those of the inner line, the differential speed between modules comprising one row is substantially zero, and therefore twisting of the product on the belt may be reduced, and there is little friction, if any between contacting surfaces of adjacent modules. Accordingly there is not need to reorientate the products before discharging them from the conveyor.

## Claims

1. A conveyor comprising a plurality of identical modules (1) connected together in the direction of intended travel, the modules (1a,1b,1c) also being connected together in the direction transverse to the intended direction of travel, the conveyor being arranged, in use, to travel around a curve wherein each module (1) includes a substantially flat or continuous supporting surface (2) and a forwardly facing overlapping portion (6) arranged to extend partly over a trailing portion of an adjacent module in the intended direction of travel at an inner region of the curve, the module also including forwardly facing projections (10,11) at both lateral ends (3,4) thereof that extend beyond the overlapping portion (6) in the intended direction of travel which projections (6) are connected to adjacent identical modules in a direction transverse to the intended direction of travel and also adjacent identical modules in the intended direction of travel, the forwardly facing projections (10,11) being connected to the underside of the overlapping portion (6).

2. A conveyor as claimed in Claim 1 in which the flat supporting surface of the trailing portion of each module includes a recessed portion (5) arranged, in use, to be at least partially overlapped by the overlapping portion (6) of an adjacent module as the conveyor travels around a curve.

3. A conveyor as claimed in Claim 2 in which the recessed portion (5) of the module extends across more than half the width of the module.

4. A conveyor as claimed in Claim 3 in which the recessed portion (5) extends across substantially the complete extent of the module.

5. A conveyor as claimed in any preceding Claim, in which the level of the overlapping portion (6) of one module which overlaps an adjacent module in the intended direction of travel is substantially the same as the level of the overlapping portion (6) of the adjacent module which is arranged to overlap another module.

6. A conveyor as claimed in any preceding claim, in which adjacent modules (1a,1b,1c) in the direction transverse to the intended direction of travel are caused to move in a line, around a bend.

7. A conveyor as claimed in Claim 6, in which adjacent connected modules (1a,1b,1c) in the direction transverse to the intended direction of travel are arranged to move around the bend at the same angular rate.

8. A conveyor as claimed in any preceding Claim, in which at least a part of the supporting surface of adjacent portions of modules in the intended direction of travel are arranged to be spaced from each other when the conveyor undergoes a substantial change in inclination.

9. A conveyor as claimed in any preceding Claim, including a single guide (22,80) arranged to inhibit both inwards and upwards movement of the conveyor with respect to a turn.

10. A conveyor as claimed in Claim 9, in which the guide (80) provides an upwardly facing portion which is arranged to provide a support for the module.

11. A conveyor as claimed in any preceding Claim, in which adjacent modules in the direction transverse to the intended direction of travel are linked to each other by a common linkage member (12).

12. A conveyor as claimed in Claim 11, in which the linkage member (12) is resiliently flexible.

13. A module for use in a conveyor, the module (1a) including first (10, 10A, 11, 11A) and second (10B, 11B) connecting means which are arranged to be used to connect the module to adjacent identical modules in front of, and behind the module and third connecting means (10,11) which are arranged to be used to connect the module to an adjacent identical module (1b) at least partially to the side of the module, wherein the module comprises a substantially flat or continuous supporting surface (2) and a forwardly facing overlapping portion (6) adapted to overlap by extending partly over an adjacent trailing portion of an identical module (1a) located in front of the module when, in use, the connected modules travel around a curve and are located at an inner region of the curve, the first and third connecting means being forwardly facing projections (10,11) at both lateral ends (3,4) of the module that extend beyond the overlapping portion (6) in the intended direction of travel, the fowardly facing projections (10,11) being connected to the underside of the overlapping portion (6).

## Patentansprüche

1. Förderanlage mit einer Mehrzahl von identischen Modulen (1), die in der beabsichtigten Förderrichtung miteinander verbunden sind, wobei die Module (1a, 1b, 1c) desweiteren miteinander in der Richtung quer zu der beabsichtigten Förderrichtung verbunnen sind, wobei die förderanlage während des Betriebs dafür vorgesehen ist, um eine Kurve zu wandern, wobei jedes Modul (1) eine im wesentlichen flache oder fortlaufende Auflageroberfläche (2), sowie einen vorwärts ausgerichteten Überlappungsabschnitt (6) hat, der dafür vorgesehen ist, sich teilweise über einen hinteren Abschnitt eines angrenzenden Moduls in die beabsichtigte Förderrichtung an einem inneren Bereich der Kurve zu erstrecken, wcbei das Modul desweiteren vorwärts gerichtete Vorsprünge (10, 11) an beiden seitlichen Enden (3, 4) von diesem hat, welche sich ober den Überlappungsabschnitt (6) in die beabsichtigte Förderrichtung erstrecken, wobei die Vorsprünge (6) an angrenzende identische Module in einer Richtung quer zu der beabsichtigten Förderrichtung und desweiteren an angrenzende identische Module in der beabsichtigten Förderichtung angeschlossen sind, wobei die vorwärts ausgerichteten Vorsprünge (10, 11) an der Unterseite des Überlappungsabschnitts (6) angeschlossen sind.

2. Förderanlage nach Anspruch 1, wonach die flache Auflagerfläche des hinteren Abschnitts jedes Moduls einen zurückgesetzten Abschnitt (5) hat, welcher im Betrieb dafür vorgesehen ist, zumindest teilweise von dem Überlappungsabschnitt (6) eines angrenzenden Moduls überlappt zu werden, wenn die Förderanlage um eine Kurve wandert.

3. Förderanlage nach Anspruch 2, wonach der zurückgesetzte Abschnitt (5) des Moduls sich quer um mehr als die Hälfte der Breite des Moduls erstreckt.

4. Förderanlage nach Anspruch 3, wonach der zurückgesetzte Abschnitt (5) sich quer im wesentlichen über das gesamte Ausmaß des Moduls erstreckt.

5. Förderanlage nach einem der vorherstehenden Ansprüche, wonach das Niveau des Überlappungsabschnitts (6) eines Moduls, welcher ein angrenzendes Modul in der beabsichtigten Bewegungsrichtung überlappt, im wesentlichen das gleiche ist, wie das Niveau des Überlappungsabschnitts (6) des angrenzenden Moduls, welcher dafür vorgesehen ist, ein weiteres Modul zu überlappen.

6. Förderanlage nach einem der vorhergehenden Ansprüche, wonach angrenzende Module (1a, 1b, 1c) in der Richtung quer zur beabsichtigten Bewegungsrichtung zu einer Bewegung in einer Linie um eine Abbiegung geswungen werden.

7. Förderanlage nach Anspruch 6, wonach in Richtung er zur beabsichtigten Bewegungsrichtung angrenzende miteinander verbundene Module (1a, 1b, 1c) dafür vorgesehen sind, sich um die Abbiegung mit der gleichen Winkelrate zu bewegen.

8. Förderanlage nach einem der vorhergehenden Ansprüche, wonach zumindest ein Teil der Auflagerfläche angrenzender Abschnitte von Modulen in der beabsichtigten Bewegungsrichtung dafür vorgesehen sind, voneinander beabstandet zu werden, falls die Förderanlage einer wesentlichen Neigungsänderung unterzogen wird.

9. Förderanlage nach einem der vorhergehenden Ansprüche mit einer einzelnen Führung (22), 80), welche dafür vorgesehen ist, sowohl eine Einwärts- als auch eine Auswärtsbewegung der Förderanlage mit Bezug zu einer Kurvenbewegung zu unterbinden.

10. Förderanlage nach Anspruch 9, wonach die Führung (80) einen aufwärts sich ausrichtenden Abschnitt vorsieht, der dafür vorgesehen ist, ein Auflager für das Modul zu schaffen.

11. Förderanlage nach einem der vorhergehenden Ansprüche, wonach angrenzende Module in Richtung quer zur beabsichtigten Bewegungsrichtung mittels eines gemeinsamen Verbindungsbauteils (12) aneinander angelenkt sind.

12. Förderanlage nach Anspruch 11, wonach das Verbindungsbauteil (12) elastisch flexible ist.

13. Modul zur Verwendung in einer Förderanlage, wobei das Modul (1a) umfaßt, erste (10, 10A, 11, 11A) und zweite (10B, 11B) Verbindungseinrichtungen, welche dafür vorgesehen sind, benutzt zu werden, um das Modul an angrenzende identische Module vor und hinter dem Modul anzuschließen sowie dritte Verbindungseinrichtungen (10, 11), welche dafür vorgesehen sind, verwendet zu werden, um das Modul an ein angrenzendes identisches Modul (1b) zumindest teilweise an der Seite des Moduls anzuschließen, wobei das Modul eine im wesentlichen flache oder fortlaufende Auflagerfläche (2) sowie einen vorwärts ausgerichteten Überlappungsabschnitt (6) hat, der dazu ausgelegt ist, durch sich Erstrecken teilweise einen angrenzenden hinteren Abschnitt eines identischen Moduls (1a) zu überlappen, welcher vor dem Modul angeordnet ist, falls im Betrieb die verbundenen Module um eine Abbiegung wandern und an einem inneren Bereich der Abbiegung angeordnet sind, wobei die erste und dritte Verbindungseinrichtung vorwärts ausgerichtete Vorsprünge (10, 11) an beiden seitlichen Enden (3, 4) des Moduls sind, welche sich über den Überlappungsabschnitt (6) in die beabsichtigte Bewegungsrichtung hinaus erstrecken, wobei die vorwärts ausgerichteten Vorsprünge (10, 11) an der Unterseite des Überlappungsabschnitts (6) angeschlossen sind.

## Revendications

1. Convoyeur comprenant une pluralité de modules identiques (1) couplés les uns aux autres dans la direction de déplacement souhaitée, les modules (1a, 1b, 1c) étant également couplés les uns aux autres dans la direction transversale à la direction de déplacement souhaitée, le convoyeur étant conçu pour, en service, se déplacer suivant une courbe, dans lequel chaque module (1) comprend une surface de support (2), continue ou sensiblement plate, et une partie de recouvrement (6), tournée vers l'avant, conçue pour s'étendre partiellement au-dessus de la partie arrière d'un module adjacent dans la direction de déplacement souhaitée au niveau de la région intérieure de la courbe, le module comprenant aussi des saillies (10, 11), tournées vers l'avant, en ses deux extrémités latérales (3, 4), qui s'étendent au-delà de la partie de recouvrement (6) dans la direction de déplacement souhaitée, lesquelles saillies sont couplées à des modules adjacents identiques dans une direction transversale à la direction de déplacement souhaitée ainsi qu'à des modules adjacents identiques dans la direction de déplacement souhaitée, les saillies (10, 11) tournées vers l'avant étant couplées à la face de dessous de la partie de recouvrement (6).

2. Convoyeur selon la revendication 1, dans lequel la surface de support plate de la partie arrière de chaque module comporte une partie en retrait (5) conçue pour être, en service, au moins partiellement recouverte par la partie de recouvrement (6) d'un module adjacent lorsque le convoyeur se déplace autour d'une courbe.

3. Convoyeur selon la revendication 2, dans lequel la partie en retrait (5) du module s'étend sur plus de la moitié de la largeur du module.

4. Convoyeur selon la revendication 3, dans lequel la partie en retrait (5) du module s'étend sur pratiquement toute l'étendue du module.

5. Convoyeur selon l'une quelconque des précédentes revendications, dans lequel le niveau de la partie de recouvrement (6) d'un premier module qui chevauche un module adjacent dans la direction de déplacement souhaitée est sensiblement le même que le niveau de la partie de recouvrement (6) du module adjacent qui est placée de manière à chevaucher un autre module.

6. Convoyeur selon l'une quelconque des précédentes revendications, dans lequel des modules adjacents (1a, 1b, 1c) dans la direction transversale à la direction de déplacement souhaitée sont amenés à se déplacer en ligne, autour d'un coude.

7. Convoyeur selon la revendication 6, dans lequel des modules adjacents couplés (1a, 1b, 1c) dans la direction transversale à la direction de déplacement souhaitée sont conçus pour se déplacer autour d'un coude à la même vitesse angulaire.

8. Convoyeur selon l'une quelconque des précédentes revendications, dans lequel une partie au moins de la surface de support de parties adjacentes de modules dans la direction de déplacement souhaitée sont conçues pour être espacées les unes des autres quand le convoyeur subit un changement d'inclinaison important.

9. Convoyeur selon l'une quelconque des précédentes revendications, comprenant un unique élément de guidage (22, 80) conçu pour empêcher à la fois le déplacement vers le haut et le déplacement vers l'intérieur du convoyeur dans un virage.

10. Convoyeur selon la revendication 9, dans lequel l'élément de guidage (80) forme une partie tournée vers le haut qui est conçue pour offrir un support au module.

11. Convoyeur selon l'une quelconque des précédentes revendications, dans lequel des modules adjacents dans la direction transversale à la direction de déplacement souhaitée sont reliés les uns aux autres par un élément de liaison (12) commun.

12. Convoyeur selon la revendication 11, dans lequel l'élément de liaison (12) est élastiquement flexible.

13. Module à utiliser dans un convoyeur, le module (1a) comprenant des premier (10, 10A, 11, 11A) et deuxième (10B, 11B) moyen d'accouplement qui sont conçus pour être utilisés afin de coupler le module à des modules adjacents identiques situés devant et derrière le module, et des troisièmes moyens d'accouplement (10, 11) qui sont conçus pour être utilisés afin de coupler le module à un module adjacent identique (1b) situé au moins partiellement sur le côté du module, dans lequel le module comprend une surface de support (2), continue ou sensiblement plate, et une partie de recouvrement (6) tournée vers l'avant, conçue pour s'étendre partiellement au-dessus de la partie arrière adjacente d'un module identique (1a) situé devant le module quand, en service, les modules accouplés se déplacent autour d'une courbe et sont placés en une région intérieure de la courbe, les premier et troisième moyens d'accouplement étant des saillies (10, 11) tournées vers l'avant, situées au niveau des deux extrémités latérales (3, 4) du module, qui s'étendent au-delà de la partie de recouvrement (6) du module adjacent dans la direction de déplacement souhaitée, les saillies (10, 11) tournées vers l'avant étant couplées à la face de dessous de la partie de recouvrement (6).
